# EUROPEAN PATENT SPECIFICATION

(11) **EP 1 752 641 B1**
(45) Date of publication and mention of the grant of the patent: **05.11.2008**
(21) Application number: 05017539.7
(22) Date of filing: 11.08.2005
(51) Int. Cl.: F02D 41/14, F02D 21/08

(54) **Engine control method and apparatus capable of performing said method**
Verfahren und Vorrichtung zur Steuerung eines Motors
Méthode et dispositif de commande d'un moteur

(43) Date of publication of application: 14.02.2007
(73) Proprietor: Delphi Technologies, Inc., Troy, MI 48007 (US)
(72) Inventor: Schreurs, Bart, 6700 Waltzing (BE); Schmitt, Julien, 57970 Yutz (FR)
(74) Representative: Robert, Vincent

(56) References cited:
- EP-A- 0 829 633
- DE-A1- 19 727 793
- FR-A- 2 798 963
- US-A- 3 872 846
- US-A- 4 186 701
- US-A- 5 806 014

## Description

The present invention relates to an engine control method, more particularly to a method for controlling and/or correcting a rate of recirculated exhaust gas without causing combustion instability.

Exhaust gas recirculation - EGR - is a well-known method to reduce NOx emissions. Current approaches for EGR are based on calibrated EGR rates. That is, the EGR ratio, i.e. the ratio of recirculated exhaust gas to fresh air, is calibrated on the relevant engine at the time of production. High EGR rates can have a negative impact on combustion stability and lead to misfires. Therefore, when calibrating an EGR rate for a certain type of engine, two major constraints apply. Higher EGR rates allow for maximal NOx reduction. However, higher EGR rates increase the possibility of misfires. However, even if an optimal EGR rate, calculated for example on the basis of a mathematical model of the combustion engine, might be available for engine calibration, this optimal value cannot be applied on account of individual engines deviating from the model engine, which for example might be due to production tolerances, ageing or drift effects, with the drift effects, for example, resulting from drift in the intake air (temperature, humidity, etc.) or the combustion. This in turn means that the optimal EGR rate might work for some engines of a relevant engine type, while for other engines or under conditions different from the conditions applied when calculating the optimal EGR rate the same optimal EGR rate might induce undesired misfires or the optimal EGR rate might work for most engines during a certain amount of time while, once the engines are further operated beyond this amount of time, undesired misfires increase. Accordingly, in practice, a suboptimal EGR rate is calibrated to all engines of the same or a sufficiently similar type in order to prevent misfires from occurring.

It is therefore an object of the present invention to overcome the defects in the prior art, more specifically to allow the engines to be calibrated with an EGR rate as high as possible under the physical constraints involved and at the same time maintain combustion stability.

US 6,367,462 discloses a torque management control that coordinates engine throttle, spark and EGR under predefined highly throttled conditions so as to maximize the fuel economy improvement of EGR without degrading engine performance. Under the predefined conditions, EGR is increased to a level that maximises the fuel economy improvement without causing combustion instability, and the throttle position and spark timing are controlled to compensate for the anticipated torque loss while increasing volumetric efficiency and reducing pumping losses. During idle and steady state cruising operation, EGR is increased, and engine throttle position is con-trolled to regulate the estimated engine output torque in accordance with the driver requested output torque. During transient torque increases, throttle control alone is used to regulate the output torque, while in transient torque decreases, the throttle position is maintained and spark timing is used to regulate the output torque. EP 0829633, FR2798963, US5806014, DE19727793 and US3872846 each show known methods of controlling EGR rate to reduce combustion instability.

The above object of the invention is achieved by carrying out the method having the features defined in claim 1. The engine control method for controlling an exhaust gas rate (EGR rate) for an internal combustion engine, according to the invention is characterised in that the step of correcting the EGR rate is only carried out once an EGR demand exceeds a predetermined EGR demand threshold and it is determined that the engine is operated in quasi steady state conditions. In line with "misfire rate" being used synonymously for "a value indicative of combustion stability", "misfire" or "misfires" in turn will be used synonymously for "decreased combustion stability".

The present invention is particularly concerned with providing a solution which directly links the occurrence of misfire or more specifically, the frequency of occurrence of misfire, basically resulting from excess EGR rate, to the EGR rate, therefore allowing for an EGR rate to be applied to the engine which would result in NOx reductions and misfires being minimised or at least significantly reduced.

The dependent claims outline advantageous forms of embodiment of the method according to the invention.

In an embodiment of the present invention, the misfire rate is obtained by applying a derivative of a rotational speed of a crankshaft of the engine controlled by the method. It has to be understood that observing the rotational speed of the crankshaft is only one method for obtaining a measure indicative of a misfire rate.

In still further accord with the present invention, the EGR rate is correct only when a desired EGR rate (EGR demand) exceeds a predetermined EGR demand threshold and the engine is operated in quasi steady state conditions. This ensures that the method according to the invention is applied

only under conditions which have been recognised as providing sufficiently manageable circumstances and effects.

Preferably, said quasi steady state operation is recognised by torque changes of the engine, during a predetermined time interval, not exceeding a predetermined torque threshold.

More preferably, said correction of the EGR rate on account of said misfire rate is obtained by applying a misfire gain derived from said misfire rate, wherein said misfire gain is arithmetically combined, more particularly multiplicatively combined, with said EGR demand, and wherein said misfire gain is set to a neutral value, such as "1.0" for multiplicative combination, on account of said EGR demand not exceeding said predetermined EGR demand threshold or on account of the engine not operating in quasi steady state conditions.

It is a further object of the invention to provide an apparatus capable of solving the above identified problem. This is achieved by an apparatus comprising means for performing the above described steps.

In accordance with the invention these means for performing the method steps comprise a sensor, preferably a motion sensor or acceleration sensor, associated to a crankshaft of the engine controlled by the apparatus, provided as a means for obtaining a value representative of the crankshaft rotation and/or the crankshaft acceleration.

In a preferred embodiment of the invention said means comprise at least one differentiator, more particularly said at least one differentiator and a filter, more particularly a low-pass filter, provided for obtaining the misfire rate by applying a derivative of a rotational speed of the crankshaft of the engine.

Preferably said means comprise threshold means, provided for asserting if an EGR demand exceeds a predetermined EGR demand threshold and/or if torque changes of the engine during a predetermined time interval exceed a predetermined torque threshold. An output of these threshold means, preferably logically combined, for example combined by means of an AND-Gate, beneficially functions as a trigger for applying the correction of the EGR rate on account of the misfire rate detected, i.e. as a trigger for applying the control scheme of the invention to the engine control.

The invention also encompasses the implementation of the invention as a computer program with the appropriate computer readable program code for implementing the method steps described above and a respective computer program product, such as a storage medium, comprising said computer program or computer readable program code.

Other features and advantages of the present invention will be apparent from the following description of a preferred embodiment of the invention, given as a non-limiting example, illustrated in the drawings. All the elements which are not required for the immediate understanding of the invention are omitted. In the drawings, the same elements are provided with the same reference numerals in the various figures, and in which:
- Fig. 1: is a simplified block diagram of a combustion engine,
- Fig. 2: is a simplified block diagram of an apparatus capable of performing the method according to the invention,
- Fig. 3: is a graph of measured values when applying the invention, and
- Fig. 4: is a simplified block diagram of a function block from Fig. 2

In the following description, for purposes of explanation and not limitation, specific details are set forth, such as particular embodiments, data flows, signalling implementations, interfaces, techniques, etc. in order to provide a thorough understanding of the present invention. However, it will be apparent to one skilled in the art that the present invention may be practised in other embodiments that depart from these specific details. For example, while the present invention is sometimes described in the context and terminology of petrol-operated engines, those skilled in the art will appreciate that the present invention can be implemented in any combustion engines, including diesel engines.

In other instances, detailed descriptions of well-known methods, interfaces, devices, and signalling techniques are omitted so as not to obscure the description of the present invention with unnecessary detail. Moreover, individual function blocks are shown in some of the figures. Those skilled in the art will appreciate that the functions may be implemented using individual hardware circuits, using software functioning in conjunction with a suitably programmed digital microprocessor or general purpose computer, using an application specific integrated circuit (ASIC), and/or using one or more digital signal processors (DSPs).

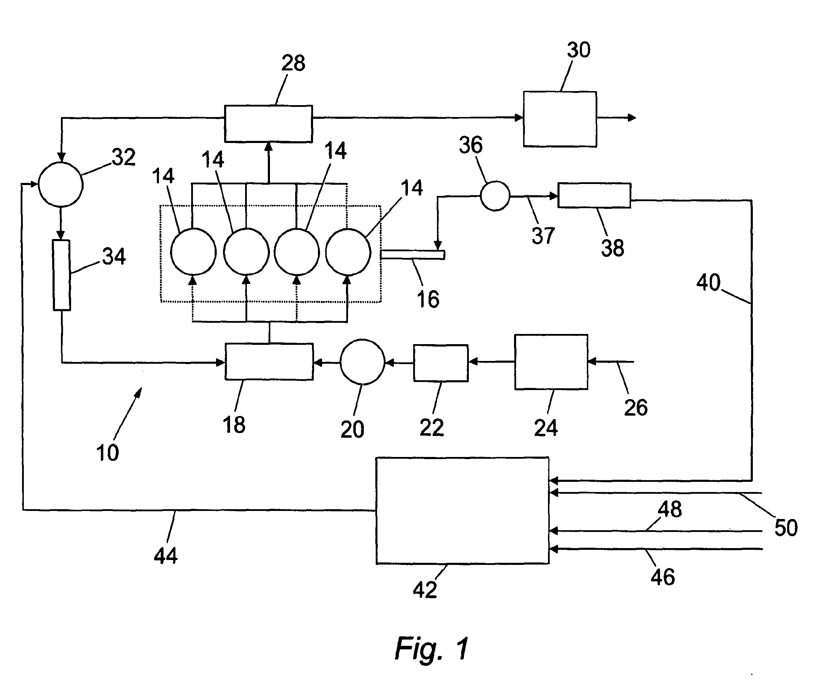

Fig. 1 is a simplified block diagram of a combustion engine 10, where a motor block 12 comprises a number of cylinders 14 and a crank shaft 16. Upstream of the motor block 12 is an intake manifold 18, a throttle 20, a fresh air cooler 22, and an air filter 24 functioning as fresh air intake 26. Downstream of the motor block 12 is an exhaust manifold 28 and an exhaust line 30.

At least part of the exhaust gas leaving the engine 10 through the exhaust manifold 28 is recirculated from the exhaust manifold via an EGR valve 32, and more specifically via an EGR valve 32 and an EGR cooler 34, to the intake manifold 18 and from there back into the engine 10.

The invention now provides for a solution allowing to feed back a maximum amount of exhaust gas while at the same time maintaining combustion stability. To this end a crankshaft motion sensor 36 is provided and associated with the crankshaft 16 for detecting a crankshaft motion, such as crankshaft angle, crankshaft rotation or crankshaft acceleration, etc. The output of the crankshaft motion sensor 36 is indicative of an injection speed 37. The crankshaft motion sensor 36 is connected to a crankshaft motion processing means 38, the injection speed 37 being an input to the crankshaft motion processing means 38 and an output 40 of the crankshaft motion processing means 38 is fed to a control unit 42.

The crankshaft motion processing means 38, while shown as a separate unit, could also be implemented as an integral part of the control unit 42, and more particularly implemented with the relevant functionality included in the functionality of the control unit 42 when implemented in software or similar.

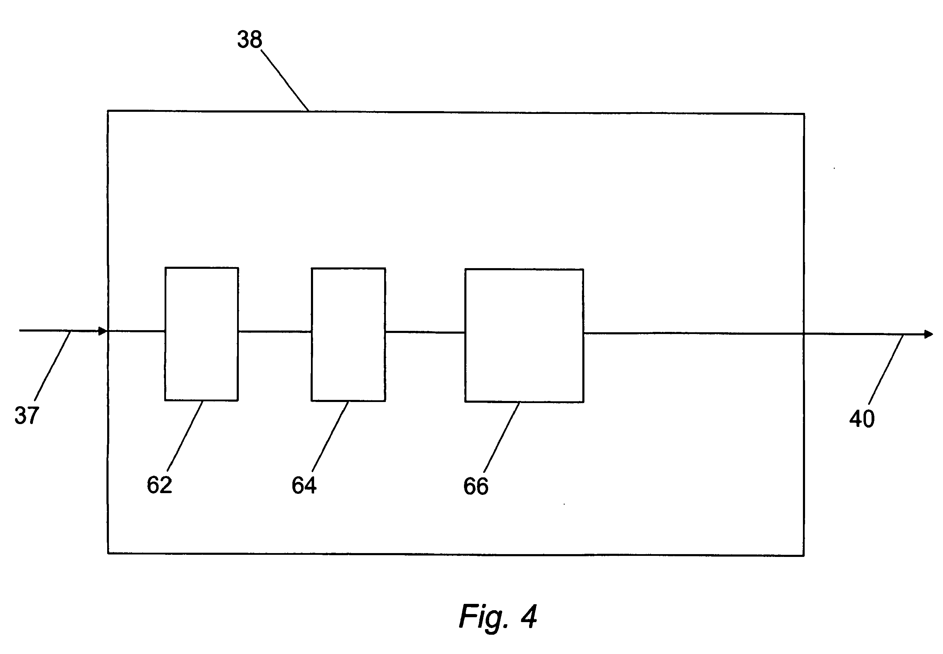

Depending on the processing of the output of the crankshaft motion sensor 36, i.e. the injection speed 37, in the processing means 38 the output 40 preferably is a derivative of a rotational speed of the crankshaft 16, more particularly the second derivative of the rotational speed of the crankshaft 16. It has been found that misfires lead to changes in the rotation of the crankshaft 16. More specifically, upon the occurrence of misfires the rotational speed and thus the acceleration of the crankshaft 16 changes. Thus the characteristics of the injection speed 37, i.e. a proportion of the rotational speed or the acceleration of the crankshaft 16, is indicative of misfires. It has further been found that applying the second derivative of the rotational speed of the crankshaft 16 is the preferred characteristic when detecting misfires. Crankshaft motion processing means 38 are therefore to be understood as comprising means, such as differentiator means (not shown in Fig. 1; cf. Fig. 4), for obtaining a derivative of the rotational speed of the crankshaft 16, more specifically for obtaining the second derivative of the rotational speed of the crankshaft 16. To this end the motion processing means 38 are to be understood as comprising two successive differentiator means (Fig. 4: 62, 64).

Output 40 and the relevant signal or data transmitted to the control unit 42, i.e. data indicative of misfires or a misfire rate 40, are denoted by the same reference numerals.

An output 44 of the control unit 42, where the control unit 42 may be comprised in the motor electronic or implemented as part of the motor electronic, is used for applying an EGR rate 44 to the EGR valve 32. Output 44 and the relevant signal or data transmitted to the EGR valve 32, i.e. the EGR rate 44, are therefore also denoted by the same reference numerals.

Since the EGR rate 44 is effectively an output of control unit 42, the EGR rate 44 more specifically is a corrected EGR rate 44, where the correction has been performed on account of said misfire rate 40.

While the output 40 is indicative of misfires, the invention, according to a further aspect, provides for the EGR rate 44 only being corrected, i.e. the position of the EGR valve 32 only being affected, once a desired EGR rate (EGR demand) 46 exceeds a predetermined EGR demand threshold 48 and the engine is operated in quasi steady state conditions.

The EGR demand 46 is fed to the control unit 42 via a further relevant input 46. The output 44, i.e. the EGR rate 44, is based on the EGR demand 46. More specifically the EGR rate 44 is a result of a mathematical combination, where the EGR demand 46 and the misfire rate 40, i.e. the output 40 or a proportion of the output 40, apply as factors. Furthermore, the EGR demand threshold 48 is a predefined or predetermined value also available in the control unit 42, for example by means of a further input 48. The control unit 42 comprise means for comparing the EGR demand 46 and the EGR demand threshold. An example of said means is a comparator (not shown). Thus, whether or not the EGR demand 46 exceeds the predetermined EGR demand threshold 48 is available in the control unit 42 by evaluating the output of such a comparator.

Whether or not the engine 10 operates in a quasi steady state condition is recognised by torque changes of the engine 10 not exceeding a predetermined torque threshold, more particularly by torque changes of the engine 10, during a predetermined time interval, not exceeding the torque threshold.

Torque changes can be detected by driver torque demand, where driver torque demands would be derivable amongst others for example from the position of the accelerator pedal. On the other hand, a value representative of the torque demand can be expected to be available in the engine control unit. Therefore, a further input 50 for transmitting a signal indicative of the torque demand, derived e.g. from the accelerator pedal position or directly from the engine control unit (not shown), is fed to the control unit 42.

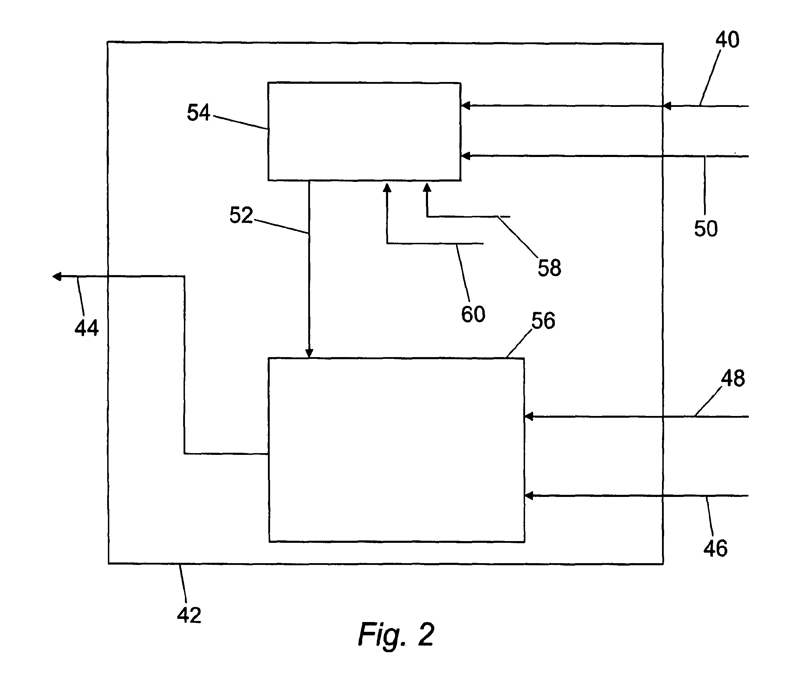

Analysing a signal, such as the characteristics of input 50 during a predetermined time interval and checking whether or not that signal during the time interval exceeds a predetermined threshold, such as the aforementioned predetermined torque threshold, is a well-known matter in the art and is readily available by implementing the relevant means, more specifically by implementing the relevant programme code e.g. program code for detecting the relevant time interval and for comparing two values, into the control unit 42. A value representative of the duration of the time interval and another value representative of the relevant torque threshold could be fed to the control unit 42 by means of further inputs (not shown in Fig. 1; cf. Fig. 2). The time interval and/or the torque threshold could also be stored in digital form in the control unit 42.

Fig. 2 is a simplified block diagram of the control unit 42 and some of the functionality comprised therein. According to what is described above, output 44 is an EGR rate 44 for controlling the position of EGR valve 32. The EGR rate 44 is obtained on the basis of an EGR demand 46 provided as an input to the control unit 42. Furthermore, the EGR rate 44 is influenced by a misfire rate 40, more specifically a misfire gain 52 derived from the misfire rate 40 through a misfire rate calculation means 54 implemented within the control unit 42.

On the basis of the EGR demand 46 and the misfire gain 52, the EGR rate 44 is obtained by means of an EGR rate calculation means 56 on the basis of a mathematical combination of at least the aforementioned parameters 44, 48, 52, preferably by multiplicatively combining at least these parameters 44, 48, 52.

On the basis of further output 50 of the crankshaft motion sensor 36, and more specifically of the crankshaft motion processing means 38, the misfire rate calculation means 54 analyses whether or not the engine 10 is operated in a quasi steady state condition. As aforementioned, quasi steady state conditions are found to be present once torque changes of the engine 10 during a predetermined time interval do not exceed a predetermined threshold value. A representation of said predetermined torque threshold is provided as a further input 58 to the misfire rate calculation means 54. Furthermore, a representation of said predetermined time interval, during which torque changes are observed, is provided as a still further input 60 to the misfire rate calculation means 54. On the basis of inputs 50, 58, 60 the misfire rate calculation means 54 is able to detect whether or not the engine 10 is operated in quasi steady state conditions and further able to output the misfire gain 52 on account of whether or not the engine 10 is operated in quasi steady state conditions. This, for example, is achieved by providing the processed input 40 or a proportion of processed input 40 as output 52 once inputs 50, 58, 60 indicate steady state conditions while providing as output 52 a neutral value, such as "1.0", once inputs 50, 58, 60 indicate transient conditions, i.e. non-steady state conditions.

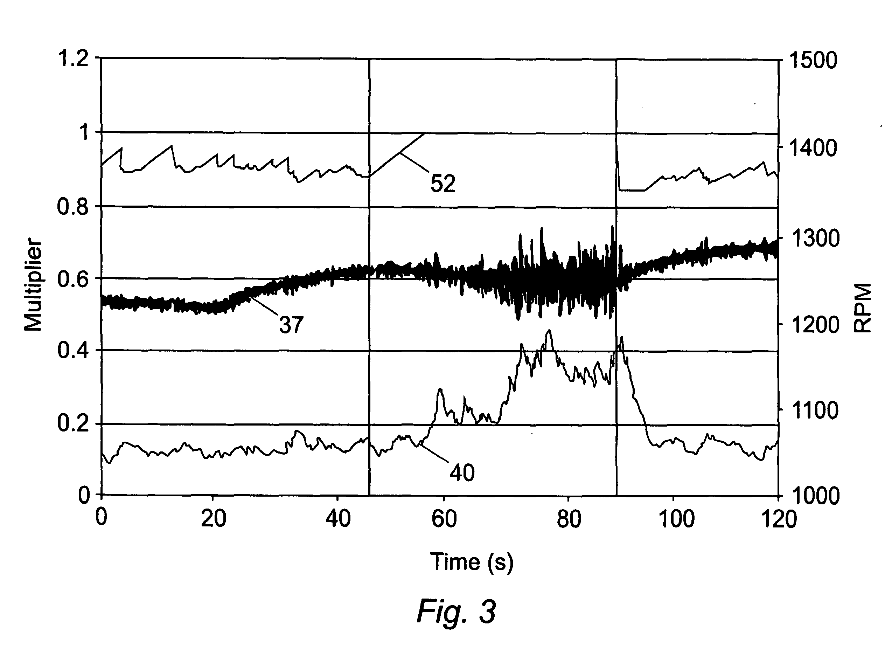

Fig. 3 is a graph of the injection speed 37, misfire rate 40 and the misfire gain 52. The abscissa is a time axis. The right hand ordinate refers to revolutions per minute (RPM) of the engine 10. The left hand ordinate is scaled from "0.0" to "1.2" to allow for the misfire gain 52, which is a multiplier, usually of a value close to "1.0", to be displayed in the same coordinate system.

Misfires are present when oscillations are seen on the injection speed graph 37. Graphs 37, 40 are seen as being related in that the amplitude of the misfire rate graph 40 is higher the more noise, i.e. oscillations, are present on the injection speed graph 37.

As would be apparent from Fig. 3 the misfire gain preferably is a value close to "1.0", where "1.0" effectively is a "neutral value" resulting in a proportion of the EGR demand 46, suitable for and provided to actuate the EGR valve 32, being applied to said EGR valve 32. However, once misfire occurs, the EGR rate is reduced and an appropriate fraction the EGR demand 46 is applied for actuating the EGR valve 32, where the "appropriate fraction" is the current value of the misfire gain 52 or a proportion of the current value of the misfire gain 52, e.g. a value of "0.9" for the misfire gain 52 would result in "90%" of the EGR demand 46 being applied for actuating the EGR valve 32.

Up to the first vertical line in Fig. 3 the graphs 37, 40, 52 shown reflect the results of the control scheme according to the invention applied. In between the first vertical line and the second vertical line the control scheme is manually disabled in order to prove the effect of the control scheme once applied. As will be apparent from Fig. 3, manually disabling the control scheme is effected by setting the misfire gain 52 to the neutral value, i.e. "1.0". The neutral value for the misfire gain 52 has the effect that the EGR rate 44 in the EGR rate calculation means 56 is solely calculated on the basis of the EGR demand 46, i.e. the EGR rate 44 equals the EGR demand 46. This, as will be apparent form the relevant section of the injection speed graph 37, leads to significant changes in the rotational speed of the crankshaft 16, i.e. significant changes in the injection speed 37, which in turn is an indicated for decreased combustion stability, e.g. increased of misfires. It has to be understood that the ramp in the misfire gain graph 52 immediately after the first vertical line is an effect of manually deactivating the control scheme. In the section after the second vertical line, the control scheme is applied again and it can be seen that the combustion stability improves soon, since the noise, i.e. high frequent oscillation, on the injection speed graph 37 is significantly reduced immediately after reactivating the control scheme according to the invention.

Fig. 4 is a simplified block diagram of the crankshaft motion processing means 38 from Fig. 2. According to Fig. 4 the function block 38 comprises a first and second differentiator 62, 64 and a filter, more particularly a low-pass filter 66. The signal behind the second differentiator 64 is thus effectively the second derivative of injection speed 37. The filter 66 basically functions as a smoothing means for smoothing the signal prior to outputting it as the misfire rate 40 to the control unit 42 or, more specifically, to the misfire rate calculation means 54.

Although a preferred embodiment of the invention has been illustrated and described herein, it is recognised that changes and variations may be made without departing from the invention as set forth in the claims. More specifically, while the particular engine control method and the corresponding apparatus as herein shown and described in detail is fully capable of attaining the above-described objects of the invention, it is to be understood that it is the presently preferred embodiment of the invention and thus is representative of the subject matter which is broadly contemplated by the present invention. However, the scope of the present invention fully encompasses other embodiments which may become obvious to those skilled in the art. Accordingly, the scope of the present invention is to be limited by nothing other than the appended claims, in which for example, reference to an element in the singular is not intended to mean "one and only one" unless explicitly so stated, but rather "one or more". All structural and functional equivalents to the elements of the above-described preferred embodiment that are known, or later come to be known, to those of ordinary skill in the art are expressly incorporated herein by reference and are intended to be encompassed by the present claims. Moreover, it is not necessary for a device or method to address each and every problem sought to be solved by the present invention, in order to be regarded as being encompassed by the present claims.

Summarising the invention described above it can shortly be described as proposing a control scheme allowing at each instance of time maximum EGR to be recirculated without effecting combustion stability. To this end, the control scheme involves observing the injection speed 37 being indicative of misfires. Thus effectively, the control scheme aims to reduce misfires. In control theory terminology the injection speed 37 functions as an error signal which is to be minimised. By correcting the EGR rate 44 in accordance with the injection speed 37 a maximum EGR rate 44, which is as close as possible to the EGR rate demand 46, which in turn preferably is the optimal EGR rate for NOx reduction etc., is applied to the engine 10.

### List of reference numerals

- 10: combustion engine
- 12: motor block
- 14: cylinder
- 16: crank shaft
- 18: intake manifold
- 20: throttle
- 22: fresh air cooler
- 24: air filter
- 26: fresh air intake
- 28: exhaust manifold
- 30: exhaust line
- 32: EGR valve
- 34: EGR cooler
- 36: crankshaft motion sensor
- 37: injection speed
- 38: crankshaft motion processing means
- 40: misfire rate
- 42: control unit
- 44: EGR rate
- 46: desired EGR rate/EGR demand
- 48: EGR demand threshold
- 50: further output
- 52: misfire gain
- 54: misfire rate calculation means
- 56: EGR rate calculation means
- 58: input
- 60: input
- 62: first differentiator
- 64: second differentiator
- 66: filter

## Claims

1. An engine control method for controlling an exhaust gas recirculation rate - EGR rate (44) - for an internal combustion engine (10),
the method comprising the steps of:
obtaining a misfire rate (40) and
correcting an EGR rate (44) on account of said misfire rate (40), **characterised in that** the step of correcting the EGR rate is only carried out once an EGR demand (46) exceeds a predetermined EGR demand threshold (48) and it is determined that the engine (10) is operated in quasi steady state conditions.

2. The method of claim 1, wherein
the misfire rate (40) is obtained from a derivative of a rotational speed of a crankshaft (16) of the engine (10) controlled by the method.

3. The method of claim 1 or claim 2, wherein
said quasi steady state operation is recognised by torque changes of the engine, during a predetermined time interval, not exceeding a predetermined torque threshold.

4. The method of any preceding claim, wherein
said correction of the EGR rate (44) on account of said misfire rate (40) is obtained by applying a misfire gain (52) derived from said misfire rate (40),
wherein said misfire gain (52) is arithmetically combined with said EGR demand (46), and
wherein said misfire gain (52) is set to a neutral value on account of said EGR demand (46) not exceeding said predetermined EGR demand threshold (48) or on account of the engine (10) not operating in quasi steady state conditions.

5. Engine control apparatus for controlling an exhaust gas recirculation rate - EGR rate (44) - for an internal combustion engine,
comprising means (36, 38, 42, 54, 56) for performing the steps of the method in any of claims 1 to 4.

6. The engine control apparatus of claim 5,
wherein said means (36, 38, 42, 54, 56) comprise a sensor (36), associated to a crankshaft (16) of the engine (10) controlled by the apparatus, provided as a means for obtaining a value representative of the crankshaft rotation and/or the crankshaft acceleration.

7. The engine control apparatus of claim 6,
wherein said means (36, 38, 42, 54, 56) comprise at least one differentiator (62, 64), more particularly said at least one differentiator (62, 64) and a filter (66), more particularly a low-pass filter (66), provided for obtaining the misfire rate (40) by applying a derivative of a rotational speed of the crankshaft (16) of the engine (10).

8. The engine control apparatus of claim 5, claim 6 or claim 7,
wherein said means (36, 38, 42, 54, 56) comprise comparator means provided for asserting if an EGR demand (46) exceeds a predetermined EGR demand threshold (48) and/or if torque changes of the engine (10) during a predetermined time interval exceed a predetermined torque threshold.

9. A computer program with a computer readable program code for implementing the method according to one of claims 1 to 4 when the program code is run on a computer.

10. A computer program product with a computer readable program code for implementing the method according to any one of claims 1 to 4 when the program code is run on a computer.

## Patentansprüche

1. Verfahren zur Steuerung eines Motors zur Regulierung einer Abgasrückführungsrate - AGR-Rate (44) - für einen Verbrennungsmotor (10),
wobei das Verfahren die folgenden Schritte aufweist:
Ermitteln einer Fehlzündungsrate (40) und
Korrigieren einer AGR-Rate (44) aufgrund besagter Fehlzündungsrate (40), **dadurch charakterisiert, dass** das Korrigieren der AGR-Rate nur durchgeführt wird, wenn ein AGR-Bedarf (46) eine vorgegebene AGR-Bedarfsschwelle (48) überschreitet und ermittelt wird, dass der Motor (10) bei Quasi-Steady-State-Bedingungen betrieben wird.

2. Verfahren nach Anspruch 1, wobei
die Fehlzündungsrate (40) durch eine Ableitung der Drehgeschwindigkeit einer Kurbelwelle (16) des mit dem Verfahren gesteuerten Motors (10) ermittelt wird.

3. Verfahren nach Anspruch 1 oder Anspruch 2, wobei
besagter Quasi-Steady-State-Betrieb anhand von Drehmomentänderungen des Motors erkannt wird, wenn eine vorgegebene Drehmomentschwelle innerhalb eines vorgegebenen Zeitintervalls nicht überschritten wird.

4. Verfahren nach jeglichem vorstehenden Anspruch, wobei
besagtes Korrigieren einer AGR-Rate (44) aufgrund besagter Fehlzündungsrate (40), durch Anrechnen einer von besagter Fehlzündungsrate (40) abgeleiteten Fehlzündungszunahme (52) ermittelt wird,
wobei besagte Fehlzündungszunahme (52) arithmetisch mit besagtem AGR-Bedarf (46) kombiniert wird, und
wobei für besagte Fehlzündungszunahme (52), wenn besagter AGR-Bedarf (46) besagte vorgegebene AGR-Bedarfsschwelle nicht übersteigt (48), oder wenn der Motor (10) nicht unter Quasi-Steady-State-Bedingungen betrieben wird, ein neutraler Wert gesetzt wird.

5. Vorrichtung zur Steuerung eines Motors zur Regulierung einer
Abgasrückführungsrate - AGR-Rate (44) - für einen Verbrennungsmotor, Mittel (36, 38, 42, 54, 56) zur Durchführung der Verfahrungsschritte gemäß jeglichem der Ansprüche 1 bis 4 umfassend.

6. Vorrichtung zur Steuerung eines Motors gemäß Anspruch 5,
wobei besagte Mittel (36, 38, 42, 54, 56) einen mit einer Kurbelwelle (16) des von der Vorrichtung gesteuerten Motors (10) assoziierten Fühler (36) umfassen, der zur Ermittlung eines für die Kurbelwellendrehung und/oder Kurbelwellenbeschleunigung repräsentativen Werts dient.

7. Vorrichtung zur Steuerung eines Motors gemäß Anspruch 6,
wobei besagte Mittel (36,38, 42, 54, 56) mindestens ein Unterscheidungsmerkmal (62, 64), insbesondere mindestens ein besagtes Unterscheidungsmerkmal (62, 64) und einen Filter (66), insbesondere einen Tiefpassfilter (66), zum Ermitteln der Fehlzündungsrate (40) durch eine Ableitung der Drehgeschwindigkeit einer Kurbelwelle (16) des mit dem Verfahren gesteuerten Motors (10) umfassen.

8. Vorrichtung zur Steuerung eines Motors gemäß Anspruch 5, Anspruch 6 oder Anspruch 7, wobei besagte Mittel (36,38, 42, 54, 56) ein Vergleichsmittel zur Bestätigung umfasst, ob ein AGR-Bedarf (46) eine vorgegebene AGR-Bedarfsschwelle (48) übersteigt und/oder ob Drehmomentänderungen des Motors (10) während eines vorgegebenen Zeitintervalls eine vorgegebene Drehmomentschwelle überschreiten.

9. Computerprogramm mit Computer-lesbarem Programmcode zur Umsetzung des Verfahrens gemäß eines der Ansprüche 1 bis 4, wenn der Programmcode auf einem Computer ausgeführt wird.

10. Computerprogramm-Produkt mit Computer-lesbarem Programmcode zur Umsetzung des Verfahrens gemäß eines der Ansprüche 1 bis 4, wenn der Programmcode auf einem Computer ausgeführt wird.

## Revendications

1. Procédé de commande de moteur pour commander un taux de recirculation de gaz d'échappement - taux RGE (44) - pour un moteur à combustion interne (10),
le procédé comprenant les étapes consistant à :
obtenir un taux de ratés d'allumage (40) et
corriger le taux RGE (44) en tenant compte dudit taux de ratés d'allumage (40),
**caractérisé en ce que** l'étape de correction du taux RGE est uniquement effectué une fois qu'une demande RGE (46) excède un seuil de demande RGE prédéterminé (48) et que l'on détermine que le moteur (10) fonctionne dans des conditions en état quasi permanent.

2. Procédé selon la revendication 1, dans lequel
le taux de ratés d'allumage (40) est obtenu à partir d'une dérivée d'une vitesse de rotation d'un vilebrequin (16) du moteur (10) commandé par le procédé.

3. Procédé selon la revendication 1 ou 2, dans lequel
ledit fonctionnement en état quasi permanent est reconnu par des changements de couple du moteur, pendant un intervalle temporel prédéterminé, qui ne dépassent pas un seuil de couple prédéterminé.

4. Procédé selon l'une quelconque des revendications précédentes, dans lequel
ladite correction du taux RGE (44) en tenant compte dudit taux de ratés d'allumage (40) est obtenue en appliquant un gain de ratés d'allumage (52) dérivé à partir dudit taux de ratés d'allumage (40),
dans lequel ledit gain de ratés d'allumage (52) est arithmétiquement combiné avec ladite demande RGE (46), et
dans lequel ledit gain de ratés d'allumage (52) est fixé à une valeur neutre en tenant compte du fait que ladite demande RGE (46) ne dépasse pas ledit seuil prédéterminé de demande RGE (48) ou en tenant compte du fait que le moteur (10) ne fonctionne pas dans des conditions en état quasi permanent.

5. Appareil de commande de moteur pour commander un taux de recirculation de gaz d'échappement - taux R G E (44) - pour un moteur à combustion interne,
comprenant des moyens (36, 38, 42, 54, 56) pour exécuter les étapes du procédé selon l'une quelconque des revendications 1 à 4.

6. Appareil de commande de moteur selon la revendication 5,
dans lequel lesdits moyens (36, 38, 42, 54, 56) comprennent un capteur (36) associé à un vilebrequin (16) du moteur (10) commandé par l'appareil, prévu à titre de moyens pour obtenir une valeur représentative de la rotation du vilebrequin et/ou de l'accélération du vilebrequin.

7. Appareil de commande de moteur selon la revendication 6,
dans lequel lesdits moyens (36, 38, 42, 54, 56) comprennent au moins un étage de différenciation (62, 64), plus particulièrement au moins un étage de différenciation (62, 64) et un filtre (66) et plus particulièrement un filtre passe-bas (66), prévu pour obtenir le taux de ratés d'allumage (40) en appliquant une dérivée d'une vitesse de rotation du vilebrequin (16) du moteur (10).

8. Appareil de commande de moteur selon la revendication 5, 6 ou 7,
dans lequel lesdits moyens (36, 38, 42, 54, 56) comprennent des moyens de comparaison prévus pour vérifier si une demande RGE (46) dépasse un seuil prédéterminé de demande RGE (48) et/ou si des changements de couple du moteur (10) pendant un intervalle temporel prédéterminé dépassent un seuil de couple prédéterminé.

9. Programme d'ordinateur avec un code de programme lisible à l'ordinateur pour mettre en oeuvre le procédé selon l'une des revendications 1 à 4 quand le code de programme est exécuté sur un ordinateur.

10. Produit de programme d'ordinateur avec un code de programme lisible à l'ordinateur pour mettre en oeuvre le procédé selon l'une quelconque des revendications 1 à 4 quand le code de programme est exécuté sur un ordinateur.
